(19) Europäisches Patentamt
European Patent Office
Office européen des brevets

(11) Publication number: **0 429 001 A2**

# (12) EUROPEAN PATENT APPLICATION

(21) Application number: **90121856.0**

(51) Int. Cl.[5]: **C08G 59/04**

(22) Date of filing: **15.11.90**

(30) Priority: **20.11.89 US 439211**

(43) Date of publication of application: **29.05.91 Bulletin 91/22**

(84) Designated Contracting States: **AT BE CH DE DK ES FR GB IT LI NL SE**

(71) Applicant: **THE DOW CHEMICAL COMPANY**
**2030 Dow Center Abbott Road P.O. Box 1967**
**Midland Michigan 48640-1967(US)**

(72) Inventor: **Cavitt, Michael B.**
**303 South Yaupon**
**Lake Jackson, Texas 77566(US)**
Inventor: **Steele, Dennis L.**
**1610 West 11th**
**Freeport, Texas 77541(US)**
Inventor: **Duncan, David J.**
**102 Ivy Street, Route 3**
**Freeport, Texas 77541(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

## (54) Epoxy resin compositions.

(57) Epoxy-containing compounds are prepared by dehydrohalogenating the reaction product of an epihalohydrin with the reaction product of a compound containing an average of more than one aromatic hydroxyl group per molecule with an alkylene oxide wherein the ratio of moles of epihalohydrin to hydroxyl groups is at least 1.2:1. When these epoxy containing compounds are formulated into coatings, the resultant products have improved chemical resistance to acids.

EP 0 429 001 A2

## EPOXY RESIN COMPOSITIONS

The present invention concerns epoxy resin compositions, curable compositions containing same and cured products thereof.

It would be desirable to have a liquid epoxy resin that provides increased corrosion resistance, additional formulating time or pot-life, sprayable or paintable at ambient temperatures which maintains or exceeds the coating performance of conventional aromatic polyether polyepoxy resins.

Bowditch in U.S. Patent No. 4,507,461 discloses epoxy resins prepared from the reaction of epichlorohydrin with the reaction product of a compound containing aromatic hydroxyl groups and an alkylene oxide so as to produce an aromatic compound containing aliphatic hydroxyl groups. The epichlorohydrin is reacted in amounts which provides a stoichiometric excess of 8 to 10 percent of the epichlorohydrin in relation to the equivalents of hydroxyl groups (this amounts to a ratio of moles of epichlorohydrin per aliphatic hydroxyl group of from 1.08:1 to 1.1:1). These epoxy resins are useful as diluents for other epoxy resins and in coating compositions. While coatings can be prepared from mixtures of these epoxy resins disclosed by Bowditch-and epoxy resins prepared from epichlorohydrin and compounds having aromatic hydroxyl groups, the resultant coatings have less chemical resistance when coating compositions containing these epoxy resins are coated onto such substrates as treated or untreated steel or treated or untreated aluminum as compared to the chemical resistance of such substrates coated with like composition but without the epoxy resin disclosed by Bowditch.

It would therefore be desirable to have available low viscosity epoxy resins which when blended with other epoxy resins and formulated into a coating composition would result in a coating which provides better chemical resistance than that which is provided by the resins disclosed by Bowditch.

The present invention provides an epoxy resin which when blended with another epoxy resin and formulated into a coating composition provides cured coatings having an improvement in chemical resistance to acids. In addition, the present invention also provides a composition that allows for additional working time for the formulator resulting in greater flexibility and control to the applicator.

One aspect of the present invention pertains to a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1.

Another aspect of the present invention pertains to a process for preparing the aforementioned product.

Another aspect of the present invention pertains to a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 40 to 70 percent of the hydroxyl groups are contributed by component (1) and from 60 to 30 percent of the hydroxyl groups are contributed by component (2), the percentages being based upon the total amount of hydroxyl groups contributed by components (1) and (2); with

(B) at least one epihalohydrin wherein the ratio of moles of epihalohydrin per hydroxyl group contained in components (A1) and (A2) is from 1.08:1 to 1.7:1.

Another aspect of the present invention pertains to a process for preparing the aformentioned product.

Another aspect of the present invention pertains to an epoxy-containing composition which comprises a mixture of

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1; and

(B) at least one aromatic or cycloaliphatic based epoxy resin having an average of more than one vicinal epoxide group per molecule and having an average degree of polymerization of from 1 to 14 or any combination thereof.

Another aspect of the present invention pertains to a process for preparing the aforementioned composition.

Another aspect of the present invention pertains to an epoxy-containing composition which comprises a mixture of

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with

(B) at least one epihalohydrin wherein the ratio of moles of epihalohydrin per hydroxyl group contained in components (A1) and (A2) is from 1.08:1 to 1.7:1; and

(II) at least one aromatic or cycloaliphatic based epoxy resin having an average of more than one vicinal epoxide group per molecule and having an average degree of polymerisation of from 1 to 14 or any combination thereof.

Another aspect of the present invention pertains to a process for the aforementioned composition.

Another aspect of the present invention pertains to a curable composition comprising

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1; and

(B) a curing amount of at least one curing agent or curing catalyst for component (A).

Another aspect of the present invention pertains to a curable composition comprising

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount

which provides a ratio of moles of component (b) to aromatic hydroxyl groups contained in component (a) of from 1:1 to 8:1; and

(2) at least one compound having an average of more than one aliphatic hydroxyl groups per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) based on the total amount of hydroxyl groups contained in components (1) and (2); with

(B) at least one epihalohydrin wherein the ratio of moles of epihalohydrin per hydroxyl group contained in component (A1) and (A2) is from 1.08:1 to 1.7:1; and

(II) a curing amount of at least one curing agent or curing catalyst for component (I).

Another aspect of the present invention pertains to a curable composition comprising

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1;

(B) at least one aromatic or cycloaliphatic based epoxy resin having an average of more than one vicinal epoxide group per molecule and having an average degree of polymerisation of from 1 to 14; and

(C) a curing amount of at least one curing agent or curing catalyst for components (A) and (B).

Another aspect of the present invention pertains to a curable composition comprising

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl groups per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) based upon the total amount of hydroxyl groups contributed by components (1) and (2); with

(B) at least one epihalohydrin wherein the ratio of moles of epihalohydrin per hydroxyl group contained in components (A1) and (A2) is from 1.08:1 to 1.7:1;

(II) at least one aromatic or cycloaliphatic based epoxy resin having an average of more than one vicinal epoxide group per molecule and having an average degree of polymerization of from 1 to 14; and

(III) a curing amount of at least one curing agent or curing catalyst for components (I) and (II).

Another aspect of the present invention pertains to the product resulting from curing the aforementioned curable compositions.

Another aspect of the present invention pertains to a process for preparing the aforemented curable compositions.

An oxyalkylated aromatic compound is prepared by reacting at least one compound having an average of more than one phenolic hydroxyl group per molecule with at least one alkylene oxide having from 2 to 4 carbon atoms per molecule at a temperature suitably from 140° C to 230° C, more suitably from 150° C to 200° C, most suitably from 150° C to 190° C for a time sufficient to complete the reaction, suitably from 2 to 48, more suitably from 2 to 24, most suitably from 4 to 20 hours.

At temperatures above 230° C, undesired side reactions may take place or an uncontrollable reaction rate may be obtained resulting in a potentially hazardous condition.

At temperatures below 140° C, the phenolic hydroxyl groups may not melt and thus be difficult to mix and/or react in a uniform manner.

The reaction can be conducted at any suitable pressure which will keep the more volatile reactants in

liquid form at the reaction temperature employed. Atmospheric to superatmospheric pressures up to about 200 psia (1379 kPa) are usually employed. It is preferred to employ pressures of from 15 psia (103 kPa) to 100 psia (689 kPa).

The components are employed in amounts which provide a ratio of the moles of alkylene oxide per aromatic hydroxyl group of from 1:1 to 8:1, from 1:1 to 4:1, more suitably from 1.2:1 to 3:1, most suitably from 1.25:1 to 2.5:1.

At ratios of the moles of alkylene oxide per aromatic hydroxyl group below 1:1, unreacted aromatic hydroxyl groups remain which may cause processing problems and lower product yields.

At ratios above 8:1, the final coating performance is lowered.

Suitable aromatic hydroxyl-containing compounds which can be employed herein include any compound containing an average of more than one aromatic hydroxyl group per molecule. Those compounds having two aromatic hydroxyl groups per molecule such as dihydroxy benzene, biphenols and bisphenols are preferred. Suitable such compounds include those represented by the following general formulas I, II or III:

Formula I

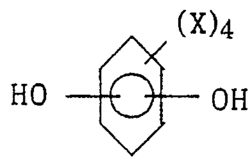

Formula II

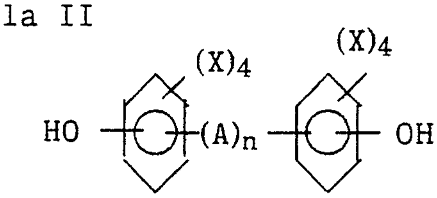

Formula III

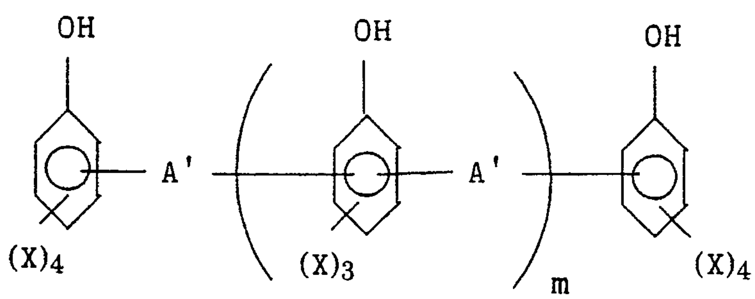

wherein each A is independently a divalent hydrocarbyl group having suitably from 1 to 12, more suitably from 1 to 6, most suitably from 1 to 4 carbon atoms, -S-, -S-S-, -SO-, $SO_2$-, -O- or -CO-; each A′ is independently a divalent hydrocarbyl group having suitably from 1 to 12, more suitably from 1 to 6, most suitably from 1 to 4 carbon atoms; each X is independently hydrogen, a hydrocarbyl or hydrocarbyloxy group having suitably from 1 to 12, more suitably from 1 to 6, most suitably from 1 to 4 carbon atoms, or a halogen, preferably chlorine or bromine; m has an average value suitably from 0.01 to 6, more suitably from 0.01 to 4, most suitably from 0.1 to 4; and n has a value of zero or 1.

Particularly suitable aromatic hydroxyl-containing compounds which can be employed herein include, for example, resorcinol, hydroquinone, catechol, biphenol, bisphenol A (4,4′-isopropylidine diphenol),

bisphenol K (4,4′-dihydroxybenzophenone), bisphenol S (4,4′-dihydroxydiphenylsulfone), bisphenol F (4,4′-dihydroxydiphenylmethane), bisphenol AP (4,4′-(1-phenylethylidene)diphenol), phenol-aldehyde novolac resins, particularly phenol-formaldehyde resins having an average functionality suitably from 0.01 to 6, more suitably from 0.01 to 4, most suitably from 0.1 to 4.

Suitable alkylene oxides which can be employed to react with the aromatic hydroxyl-containing compound include, for example, ethylene oxide, propylene oxide, butylene oxide and any combination thereof.

The resultant alkoxylated aromatic compound is then reacted with an epihalohydrin at a temperature suitably from 50°C to 90°C, more suitably from 55°C to 80°C, most suitably from 60°C to 70°C for a time sufficient to complete the reaction, suitably from 1 to 6, more suitably from 1 to 4, most suitably from 1.5 to 3 hours at pressures from atmospheric to superatmospheric, usually up to 100 psia (689 kPa), more suitably from 15 psia (103 kPa) to 50 psia (344 kPa), most suitably from 15 psia (103 kPa) to 30 psia (206 kPa) and the components are employed in a ratio of moles of epihalohydrin per hydroxyl group contained in the above reaction product suitably from 1.2 to 1.7, more suitably from 1.3 to 1.7, most suitably from 1.3 to 1.5.

At temperatures above 90°C, the reaction is difficult to control and has the possibility of having an uncontrollable exothermic reaction if heat energy cannot be removed efficiently.

At temperatures below 50°C, the viscosity of the oxyalkylated aromatic hydroxyl-containing compound may be too high to allow mixing or mixing may even be impossible.

At mole ratios below 1.2:1, coatings prepared from the dehydrohalogenated product does not have the good acid resistance property.

Suitable epihalohydrins which can be employed herein include, for example, epichlorohydrin, epibromohydrin, epiiodohydrin, methylepichorohydrin, methylepibromohydrin, methylepiiodohydrin, ethylepichorohydrin, ethylepibromohydrin, ethylepiiodohydrin, propylepichorohydrin, propylepibromohydrin, propylepiiodohydrin, butylepichorohydrin, butylepibromohydrin, butylepiiodohydrin and any combination thereof.

If desired, before reacting the oxyalkylated aromatic compound with an epihalohydrin, it can be mixed with a compound having an average of more than one aliphatic hydroxyl group per molecule which compound is free of aromatic rings. Suitable such compounds having an average of more than one aliphatic hydroxyl group per molecule and which is free of aromatic rings which can be employed herein, include, for example, ethylene glycol, propylene glycol, diethylene glycol, dipropylene glycol, tripropylene glycol, 1,4-butanediol, 1,6-hexanediol, polyoxypropylene glycol, polyoxybutylene glycol, glycerine, 1,2,3-trihydroxybutane, 1,2,4-trihydroxybutane, trimethylol propane, neopentyl glycol, dibromoneopentyl glycol, cyclohexane dimethanol and any combination thereof. While any of the aliphatic hydroxyl-containing compounds free of aromatic rings are suitable, it is preferred to employ those which are monomeric, that is, those which are essentially free of ether groups. It is also preferred to employ those which have an average of more than two aliphatic hydroxyl groups per molecule. These compounds can be blended in amounts such that from 30 to 70, preferably from 35 to 70, more preferably from 40 to 67 percent of the hydroxyl groups are contributed by the oxyalkylated aromatic compound and from 70 to 30, preferably from 65 to 30, more preferably from 60 to 33 percent of the hydroxyl groups are contributed by the aliphatic hydroxyl group-containing compound which is free of aromatic rings, the percentages being based upon the total amount of hydroxyl groups contributed by the hydroxyl group-containing compounds.

When an epihalohydrin is reacted with such a mixture, it is employed in an amount which provides a ratio of moles of epihalohydrin per hydroxyl group suitably from 1.08:1 to 1.7:1, more suitably from 1.2:1 to 1.7:1, most suitably from 1.3:1 to 1.5:1.

At ratios below 1.08:1, the resultant cured coating does not have the desired improved acid resistance.

At ratios above 1.7:1, the yield to desirable product may be undesirably decreased.

The reaction between the epihalohydrin and the alkoxylated aromatic compound(s) or mixture of such compound(s) and aliphatic hydroxyl-containing compound(s) is usually conducted in the presence of a catalyst. Suitable such catalysts are Lewis acid catalysts. Suitable Lewis acid catalysts include, for example, stannic chloride, boron trifluoride, boron trifluoride complexed with ethers or amines and any combination thereof so long as the catalyst does not cause an undesired effect on the final epoxy resin. The catalyst is usually employed in amounts of from 0.002 to 0.02, more usually from 0.003 to 0.018, most usually from 0.003 to 0.016 mole of catalyst per hydroxyl equivalent.

Other processes are known that will couple epihalohydrin to an alcohol such as the process known as phase transfer catalysis. Suitable catalysts that can be employed in this process include, for example, benzyltrimethyl ammonium chloride, benzyltriethyl ammonium chloride, benzyltrimethyl ammonium hydroxide and tetrabutyl ammonium chloride.

In the phase transfer method, the quantity of catalyst varies with the reactants, catalyst and reaction conditions, however the catalyst can be employed in amounts of from 0.5 to 7, more suitably from 1 to 6, most suitable from 2 to 5 percent by weight of catalyst based on the weight of hydroxyl-containing compound employed.

The product resulting from reacting the epihalohydrin with the aliphatic hydroxyl-containing compound or compounds is then dehydrohalogenated with a basic acting compound to form the vicinal epoxy-containing compound. Suitable basic acting compounds which can be employed herein as the dehydrohalogenating agent include, for example, alkali metal and alkaline earth metal hydroxides and combinations thereof. Preferred dehydrohalogenating agents are the alkali metal hydroxides, particularly sodium hydroxide. The dehydrohalogenating agents are employed in amounts which provide from 0.97 to 3, more suitably from 1 to 2, most suitably from 1 to 1.6 moles of dehydrohalogenating agent per halohydrin group contained in the reaction product resulting from reacting the oxyalkylated aromatic compound or mixture of oxyalkylated aromatic compound and compound having an average of more than two aliphatic hydroxyl groups per molecule.

At amounts less than 0.97 mole of dehydrohalogenating agent per halohydrin group, incomplete reaction will occur causing decreased product yields.

At amounts more than 3 moles of dehydrohalogenating agent per halohydrin group, the possibility for oligomer formation is increased which results in potentially decreased product yields.

The resultant epoxy compounds can be blended with aromatic or cycloaliphatic based epoxy resins having an average degree of polymerization of from 1 to 14, more suitably from 1 to 6, most suitably from 1 to 3, and an average functionality of from greater than 1 to 3, preferably from 1.5 to 2.2, more preferably from 1.75 to 2.1.

By "degree of polymerization", it is meant the average number of repeatable groups plus 1 present in the epoxy resin.

For purposes of further clarification of what is meant by "degree of polymerization", in Formulas IV to IX enumerated below, when $m'$ and $n'$ have values of zero, for example, the epoxy resin has a degree of polymerization of 1; likewise, when $M'$ and $n'$ have average values of 0.1, 0.5, 1, 2, for example, the degree of polymerization is 1.1, 1.5, 2, 3 respectively.

What is meant by the term "aromatic or cycloaliphatic based epoxy resins", it is meant that the glycidyl ether group is attached to a carbon atom in an aromatic or benzene ring or a cycloaliphatic ring.

Suitable such aromatic or cycloaliphatic based epoxy resins which can be employed herein include, for example, those represented by the following Formulas IV, V, VI, VII, VIII or IX:

Formula IV

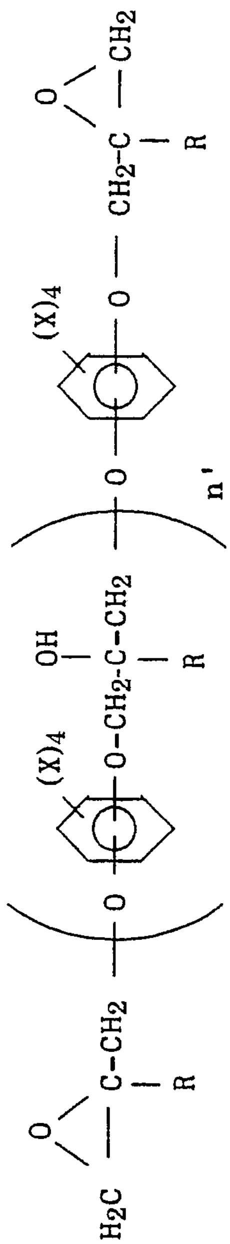

Formula V

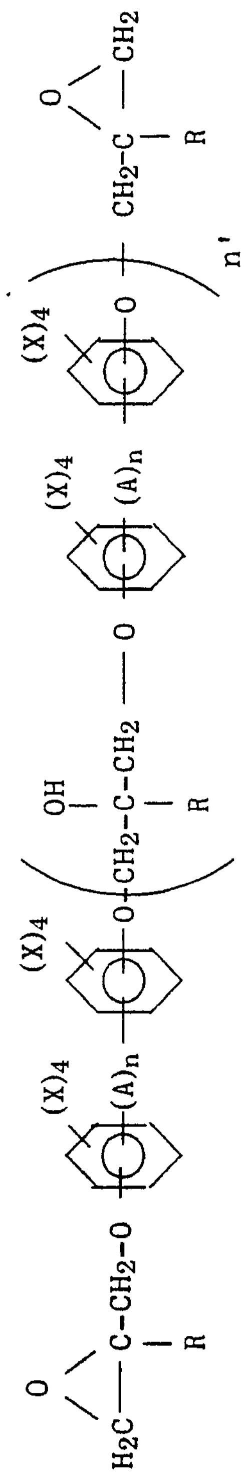

Formula VI

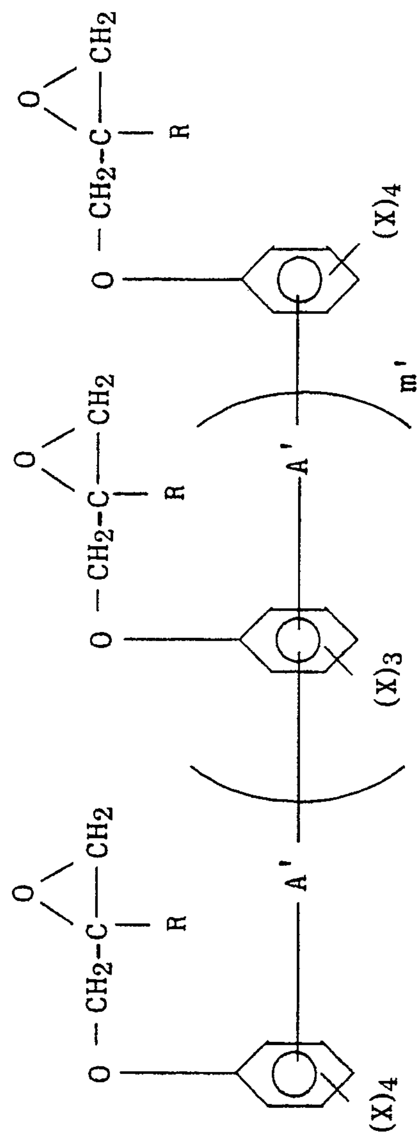

Formula VII

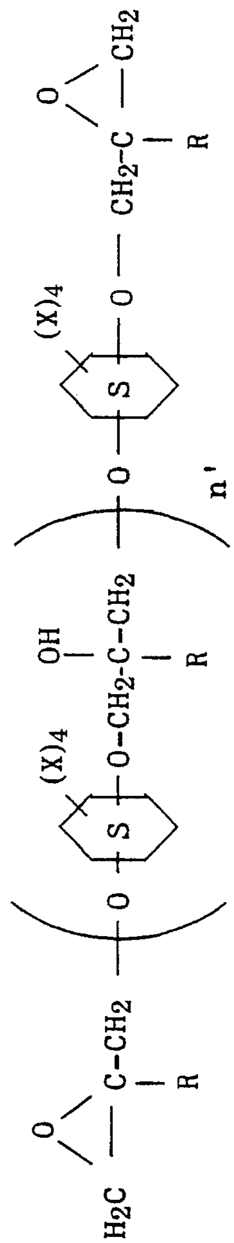

Formula VIII

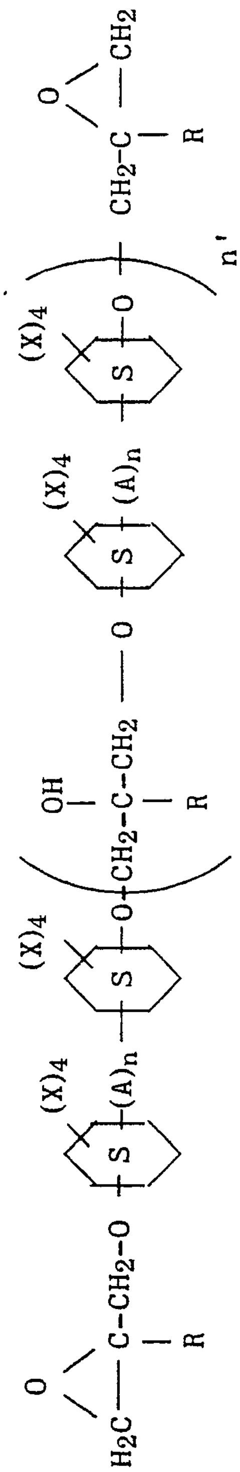

Formula IX

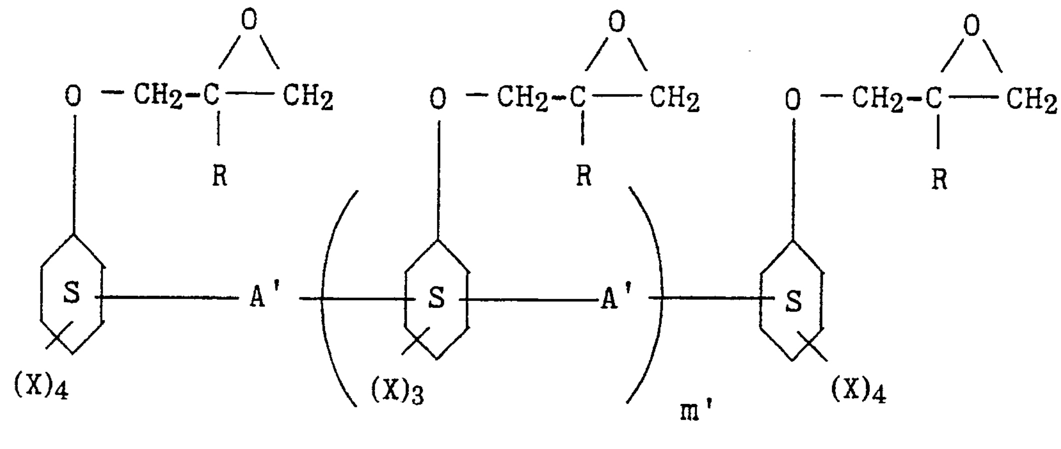

wherein each A is independently a divalent hydrocarbyl group having suitably from 1 to 12, more suitably from 1 to 6, more suitably from 1 to 4 carbon atoms, -S-, -S-S-, -SO-, $SO_2$-, -O- or -CO-; each A′ is independently a divalent hydrocarbyl group having suitably from 1 to 12, more suitably from 1 to 6, most suitably from 1 to 4 carbon atoms; each R is independently hydrogen or an alkyl group having from 1 to 4 carbon atoms; each X is independently hydrogen, a hydrocarbyl or hydrocarbyloxy group having suitably from 1 to 12, more suitably from 1 to 6, most suitably from 1 to 4 carbon atoms, or a halogen, preferably chlorine or bromine; m′ has an average value suitably from 0.01 to 6, more suitably from 0.01 to 4, most suitably from 0.1 to 4; n has a value of zero or 1; and n′ has an average value suitably from zero to 13, more suitably from zero to 5, most suitably from zero to 2.

Particularly suitable epoxy resins which can be blended with the other epoxy-containing compounds include, for example, the diglycidyl ethers of biphenol, bisphenol A, bisphenol F, bisphenol K, bisphenol S, bisphenol AP, hydrogenated biphenol, hydrogenated bisphenol A, hydrogenated bisphenol F, hydrogenated bisphenol K, hydrogenated bisphenol S, hydrogenated bisphenol AP; polyglycidyl ethers of phenol- or cyclohexanol-aldehyde novolac resins and combinations thereof.

The blends suitably contain from 20 to 80, more suitably from 30 to 70, most suitably from 35 to 65 percent by weight glycidyl ether of aliphatic hydroxyl-containing compound(s) and from 80 to 20, more suitably from 70 to 30, most suitably from 65 to 35 percent by weight aromatic or cycloaliphatic based epoxy resin all percentages being based upon the combined weight of the epoxy-containing compounds.

The epoxy-containing compounds can be cured with any suitable curing agent or curing catalyst. Suitable such curing agents or curing catalysts are disclosed by Lee and Neville in Handbook of Epoxy Resins, McGraw-Hill, (1967); and in EPOXY RESINS Chemistry and Technology, Edited by Clayton A. May, Marcel Dekker, Inc. (1988). Suitable such curing agents include, for example, primary and secondary aliphatic, cycloaliphatic or aromatic amines, polyalkylene polyamines, polycarboxylic acids and anhydrides thereof, polysulfides, compounds having a plurality of aromatic hydroxyl groups, polyamides, guanidines, biguanides and combinations thereof. Particularly suitable curing agents include, for example, ethylenediamine, 1,3-propanediamine, 1,6-hexanediamine, diethylenetriamine, triethylenetetramine, 1,3-diaminocyclohexane, N-aminoethylpiperazine, 4,4′-methylenedianiline, diaminodiphenylsulfone, amidoamines obtained from the reaction of one or more fatty acids with one or more polyamines, aminated polypropylene glycol, polyamine adducts of the diglycidyl ether of bisphenol A, polyamine adducts of the diglycidyl ether of bisphenol F, dicyanidamide, phthalic anhydride, terephthalic acid, NADIC methyl anhydride and any combination thereof.

The following examples are illustrative of the present invention, but are not to be construed as to limiting the scope thereof in any manner.

The following components are employed in the examples.

ALCOHOL A is a dialcohol of the reaction product of about 3.4 moles of propylene oxide with about 1 mole of bisphenol A resulting in a hydroxyl equivalent weight (HEW) of 214.1.

ALCOHOL B is trimethanol propane having a HEW of 44.7.

ALCOHOL C is a dialcohol of the reaction product of about 4 moles of butylene oxide with about 1 mole of bisphenol A resulting in a HEW of 268.1.

EPOXY RESIN A is a diglycidyl ether of bisphenol A having an epoxy equivalent weight (EEW) of 171.7.

EPOXY RESIN B is a diglycidyl ether of bisphenol A having an EEW of 172 that has been reacted with 0.0233 equivalent of pelargonic acid, 0.018 equivalent of lauric acid and 0.016 equivalent of myristic acid resulting in an epoxy resin having an EEW of 198.

AMINE A is an amine available from Henkel Corporation as GENAMID 235 having an amine hydrogen equivalent weight (AHEW) of 95.

AMINE B is a curing agent containing aliphatic primary and secondary amine groups available from The Dow Chemical Company as D.E.H.TM 52 Epoxy Hardener having an AHEW of 44.5.

Example 1

A. Mole Ratio of Epihalohydrin to OH Groups of 1.152:1 (Not an Example of the Present Invention)

To a reaction vessel equipped with a nitrogen purge, stirrer, temperature control and condenser was added 400 g (1.8683 alcohol equivalents) of ALCOHOL A and 7.48 g (0.0287 mole) of stannic chloride at 50° C. The temperature of the mixture was increased to 60° C whereupon 199.08 g (2.1522 moles) of epichlorohydrin was added over a time period of 1.58 hour. After the epichlorohydrin addition was complete, the reaction mixture was digested for 0.75 hour at 65° C. Methyl isobutyl ketone, 400 grams, was added and at a temperature of 85° C, 95.6 g of water and 95.6 g of 50 weight percent sodium hydroxide were added. The temperature decreased to 56° C. The reaction mixture was heated to 85° C and maintained for 2.67 hours, then the two phases were allowed to separate. The aqueous phase was removed and 78 g of water and 78 g of 50 weight percent sodium hydroxide were added. The temperature was increased to 85° C and was maintained for 2 hours. The two phases were allowed to separate then the aqueous phase was removed. The previous step was repeated. After the separation, 1400 g of methyl isobutyl ketone was added and the organic phase was washed with water to a neutral pH. This washing step employed three water treatments of 600 g of water each time. The resulting solution was vacuum distilled to remove the solvent and residual water yielding 491 g of product. The resulting product had a percent epoxide of 12.36, percent total chloride of 2.76 and a hydrolyzable chloride of 109 parts per million (ppm).

B. Mole Ratio of Epihalohydrin to OH Groups of 1.286:1

To a reaction vessel equipped with a nitrogen purge, stirrer, temperature control and condenser was added 527.9 g (2.4657 OH equivalents) of ALCOHOL A and 3.0 g (0.0115 mole) of stannic chloride at 30° C. The temperature of the mixture was increased to 60° C whereupon 293.4 g (3.1719 moles) of epichlorohydrin was added over a time period of 1.17 hour. After the epichlorohydrin addition was complete, the reaction mixture was digested for 0.75 hour at 65° C. Methyl isobutyl ketone, 548 g was added and at a temperature of 85° C, 130 g of water and 130 g of 50 weight percent sodium hydroxide were added. The temperature decreased to 70° C. The reaction mixture was heated to 85° C and maintained for 1.98 hour then the two phases were allowed to separate. The aqueous phase was removed and then 120 g of water and 120 g of 50 weight percent sodium hydroxide were added. The temperature was increased to 85° C and maintained for 2 hours. The two phases were allowed to separate then the aqueous phase was removed. After the separation, 1916 g of methyl isobutyl ketone was added and the organic phase was washed with water to a neutral pH. This washing step employed three water treatments of 800 g of water each time. The resulting solution was vacuum distilled to remove the solvent and residual water yielding 763.8 g of product. The resulting product had a percent epoxide of 12.82, percent total chloride of 4.1 and a hydrolyzable chloride of 48 ppm.

C. Mole Ratio of Epihalohydrin to OH Groups of 1.5:1

To a reaction vessel equipped with a nitrogen purge, stirrer, temperature control and condenser was added 464.7 g (2.1705 alcohol equivalents) of ALCOHOL A and 5.0 g (0.0192 mole) of stannic chloride at 24° C. The temperature of the mixture was increased to 60° C whereupon 301.2 g (3.2562 moles) of epichlorohydrin was added over a time period of 1.03 hour maintaining a temperature between 60° C to 80° C. After the epichlorohydrin addition was complete, the reaction mixture was digested for 0.75 hour at 60° C. Methyl isobutyl ketone, 510.5 g was added and at a temperature of 80° C, 130 g of water and 130 g of 50 weight percent sodium hydroxide were added. The reaction mixture was heated to 80° C and maintained for 2 hours then the two phrases were allowed to separate. The aqueous phase was removed and then 130 g of water and 130 g of 50 weight percent sodium hydroxide were added. The temperature was increased to 80° C and maintained for 1.98 hour. The two phases were allowed to separate and then the aqueous phase was removed. Then 130 g of water and 130 g of 50 weight sodium hydroxide were

added. The temperature was increased to 80°C and maintained for 3.08 hours. The two phases were allowed to separate and then the aqueous phase was removed. After the separation, 1787 g of methyl isobutyl ketone was added and the organic phase was washed with water to a neutral pH. This washing step employed three water treatments of 766 g of water each time. The resulting solution was vacuum distilled to remove the solvent and residual water. The resulting product had a percent epoxide of 12.97, percent total chloride of 5.49 a hydrolyzable chloride of 36 ppm.

D. Mole Ratio of Epihalohydrin to OH Groups of 1.7:1

To a reaction vessel equipped with a nitrogen purge, stirrer, temperature control and condenser was added 464.7 g (2.1705 alcohol equivalents) of ALCOHOL A and 5.0 g (0.0192 mole) of stannic chloride at 27°C. The temperature of the mixture was increased to 60°C whereupon 341.3 g (3.6897 moles) of epichlorohydrin was added over a time period of 1.08 hour. After the epichlorohydrin addition was complete, the reaction mixture was digested for 0.75 hour at 60°C. Methyl isobutyl ketone, 537 g was added and at a temperature of 80°C, 148 g of water and 148 g of 50 weight percent sodium hydroxide was added. The temperature decreased to 68°C. The reaction mixture was heated to 80°C and maintained for 2 hours then the two phases were allowed to separate. The aqueous phase was removed then 148 g of water and 148 g of 50 weight percent sodium hydroxide were added. The temperature was increased to 80°C and maintained for 2 hours. The two phases were allowed to separate then the aqueous phase was removed and 148 g of water and 148 g of 50 weight percent sodium hydroxide were added. The temperature was increased to 80°C and maintained for 3 hours. The two phases were allowed to separate then the aqueous phase was removed. After the separation, 1881 g of methyl isobutyl ketone was added and the organic phases was washed with water to a neutral pH. This washing step employed three water treatments of 800 g of water each time. The resulting solution was vacuum distilled to remove the solvent and residual water. The resulting product had a percent epoxide of 12.71, percent total chloride of 6.89 and hydrolyzable chloride of 3 ppm.

Example 2 (Mixture of Aliphatic OH Compounds; 65.15 percent of OH Groups Contributed by Oxyalkylated Aromatic Compound; Mole Ratio of Epihalohydrin:OH of 1.289:1)

To a reaction vessel equipped with a nitrogen purge, stirrer, temperature control and condenser was added 315 g (1.4713 alcohol equivalent) of ALCOHOL A, 35 g (0.7829 alcohol equivalent) of ALCOHOL B, and 2.6 g (0.0099 mole) of stannic chloride at ambient temperature. The temperature of the mixture was increased to 60°C whereupon 268.7 g (2.9048 moles) of epichlorohydrin was added over a time period of 0.9 hour. After the epichlorohydrin addition was complete, the reaction mixture was digested for 0.75 hour at 65°C. Methyl isobutyl ketone, 412.5 g was added and at a temperature of 58°C 230 g of water and 230 g of 50 weight percent sodium hydroxide were added. The reaction mixture was heated to 85°C and maintained for three hours then the two phases were allowed to separate. The aqueous phase was removed and 120 g of water and 120 g of 50 weight percent sodium hydroxide were added. The temperature was increased to 85°C and maintained for 2 hours. The two phases were allowed to separate then the aqueous phase was removed. After the separation, 1443.6 g of methyl isobutyl ketone was added and the organic phase was washed with water to a neutral pH. This washing step employed eight water treatments of 600 g of water each time. The resulting solution was vacuum distilled to remove the solvent and residual water yielding 573 g of product. The resulting product had a percent epoxide of 15.74, percent total chloride of 4.49 and a hydrolyzable chloride of 195 ppm.

Example 3 (Mixture of Aliphatic OH Compounds; 45.38 percent of OH Groups Contributed by Oxyalkylated Aromatic Compound; Mole Ratio of Epihalohydrin:OH of 1.303:1)

To a reaction vessel equipped with a nitrogen purge, stirrer, temperature control and condenser was added 320 g (1.4946 alcohol equivalent) of ALCOHOL A, 80 g (1.7897 alcohol equivalent) of ALCOHOL B, and 33 g (0.0127 mole) of stannic chloride at ambient temperature. The temperature of the mixture was increased to 60°C whereupon 395 g (4.2703 moles) of epichlorohydrin was added over a time period of 1.58 hour. After the epichlorohydrin addition was complete, the reaction mixture was digested for 0.75 hour at 65°C. Methyl isobutyl ketone, 530 g, was added and at a temperature of 75°C, 345 g of water and 345 g of 50 weight percent sodium hydroxide were added. The reaction mixture was heated to 70°C and maintained for three hours and the two phases were allowed to separate. The aqueous phase was removed and 170 g of water and 170 g of 50 weight percent sodium hydroxide were added. The temperature was

increased to 85°C and maintained for 1.92 hour. The two phases were allowed to separate then the aqueous phase was removed. After the separation, 1855 g of methyl isobutyl ketone was added and the organic phase was washed with water to a neutral pH. This washing step employed ten water treatments of 800 g of water each time. The resulting solution was vacuum distilled to remove the solvent and residual water yielding 723 g of product. The resulting product had a percent epoxide of 18.57, percent total chloride of 5.71 and a hydrolyzable chloride of 205 ppm.

Example 4 (Mole Ratio of Epihalohydrin:OH of 1.291:1)

To a reaction vessel equipped with a nitrogen purge, stirrer, temperature control and condenser was added 449 g (1.6747 alcohol equivalent) of ALCOHOL C and 4.9 g (0.0188 mole) of stannic chloride at ambient temperature. The temperature of the mixture was increased to 60°C whereupon 200 g (2.1622 moles) of epichlorohydrin was added over a time period of 0.6 hour. After the epichlorohydrin addition was completed, the reaction mixture was digested for 0.73 hour at 65°C. Methyl isobutyl ketone, 430 g was added and at a temperature of 64°C, 99 g of water and 99 g of 50 weight percent sodium hydroxide were added. The reaction mixture was heated to 85°C and maintained for three hours then the two phases were allowed to separate. The aqueous phase was removed and 81 g of water and 81 g of 50 weight percent sodium hydroxide were added. The temperature was increased to 85°C and maintained for 2 hours. The two phases were allowed to separate then the aqueous phase was removed. The aqueous phase was removed and 81 g of water and 81 g of 50 weight percent sodium hydroxide were added. The temperature was increased to 85°C and maintained for 2.3 hours. The two phases were allowed to separate then the aqueous phase was removed. The last step was repeated one more time. After the separation, 1500 g of methyl isobutyl ketone was added and the organic phase was washed with water to a neutral pH. This washing step employed three water treatments of 600 g of water each time. The resulting solution was vacuum distilled to remove the solvent and residual water yielding 608 g of product. The resulting product had a percent epoxide of 11.01, percent total chloride of 3.62 and a hydrolyzable chloride of 70 ppm.

Example 5

The gelation time was determined by mixing the epoxy resins with the amines at an equivalent ratio of 1:1 giving a total of 100 gms. The results are shown in Table I.

Table I

| (Cure Time) | | | | |
|---|---|---|---|---|
| Sample | Curing Agent | Epoxy Resin | | Cure Time in Hours |
| | | Type | Grams | |
| A* | Amine B | 1A | 88.42 | 6.06 |
| B | Amine B | 1B | 88.25 | 16.38 |

*Not an example of the present invention.

Example 6

Coating formulations were prepared from some of the epoxy compositions prepared above and tested for gloss and corrosion (chemical) resistance. The coating formulations were prepared by adding the epoxy resins to a one quart (0.946 L) metal container, adding the fillers, additives and solvents. After blending the mixture, the curing agent was added and blended. The resultant coating was then applied to a cold rolled steel substrate using a pull-down-bar to a wet film thickness of 6 mils (0.1524 mm). The coated panels were then cured at ambient temperature for seven days.

The resultant cured panels were then tested for chemical resistance. The coated cold rolled steel panels were prepared for testing in the following manner.

A rubber gasket measuring 63 mm outside diameter (O.D.) x 38 mm inside diameter (I.D.) x 3 mm long

was affixed to the pigmented coating surface using a rubberized cement. This was allowed to set, then the test acid was placed inside the cut-out gasket covering the exposed coating surface. A glass cover was then placed on top of the gasket and sealed with high viscosity grease. The appearance of the coating was viewed through the glass cover to determine when the coating failure occurs. A coating failure occurs when the coating begins to delaminate or bubbles or blisters are noted.

The formulation and results are given in Table II.

Table II

| Component & Property | Sample | | | |
|---|---|---|---|---|
| | A* | B | C | D |
| Epoxy Resin | | | | |
| Type/grams | B/50 | B/50 | B/50 | B/50 |
| Type/grams | Ex 1A/50 | Ex 1B/50 | Ex 2/50 | Ex 3/50 |
| Amine B, grams | 17.64 | 18.02 | 19.52 | 20.99 |
| $TiO_2$, grams | 86.6 | 86.6 | 86.6 | 86.6 |
| $BaSO_4$, grams | 200 | 200 | 200 | 200 |
| Bentone SD-3[a], grams | 3 | 3 | 3 | 3 |
| BYK 310[b], grams | 1.5 | 1.5 | 1.5 | 1.5 |
| BYK 052[c], grams | 1.5 | 1.5 | 1.5 | 1.5 |
| Methyl Isobutyl Ketone, grams | 10.16 | 10.64 | 9.84 | 9.28 |
| Methyl Ethyl Ketone, grams | 20.32 | 21.28 | 19.68 | 18.56 |
| Butanol, grams | 33.02 | 34.58 | 31.98 | 30.16 |
| Corrosion Resistance to $HNO_3$, time to failure in days | 5 | 7 | 5 | 5 |
| Corrosion Resistance to Glacial Acetic Acid, time to failure in hours | 2.40 | 2.64 | 3.60 | 7.92 |

*Not an example of the present invention.
a Bentone SD-3 is an organoclay commercially available from NL Industries employed as a rheological control additive.
b BYK310 is a heat resistance silicone additive commercially available from BYK Chemie employed to improve leveling, increased surface slip, reduced cratering and prevent Bênart cell formation.
c BYK 052 is a defoamer additive commercially available from BYK Chemie.

Example 7 Mole Ratio of Epihalohydrin to OH Groups of 1.1:1 with 10 percent ALCOHOL B

To a reaction vessel equipped with a nitrogen purge, stirrer, temperature control and condenser was added 489.6 g (2.2868 alcohol equivalents) of ALCOHOL A, 54.4 g (1.217 alcohol equivalent) of ALCOHOL B, and 6 g (0.0228 mole) of stannic chloride at 60 °C whereupon 356.5 g (3.8541 moles) of epichlorohydrin was added over a time period of 1.75 hour. After the epichlorohydrin addition was complete, the reaction mixture was digested for 0.75 hour at 65 °C. Methyl isobutyl ketone, 600.4 g was added and after raising the temperature to 80 °C, 308 g of water and 308 g of 50 weight percent sodium hydroxide are added. The temperature of 80 °C was maintained for 3.07 hours. The reaction mixture was then allowed to separate into two phases. The aqueous phase was removed and 154 g of water and 154 g of weight percent sodium hydroxide were added. The temperature was increased to 80 °C and maintained for 2 hours. The reaction mixture was allowed to separate into two phases and the aqueous phase was removed. After the separation, 2101 g of methyl isobutyl ketone were added and the organic phase was washed with water to a neutral pH. This washing step employed three water treatments of 890 g of water each time. The resulting solution was vacuum distilled to remove the solvent. The resulting product had a percent epoxide of 5.27, percent total

chloride of 0.33 and a hydrolyzable chloride of 1 ppm.

Coating Results:

Coatings were prepared by blending the components listed in the following Table III.

Table III

| Sample | Resin 1 (grams) | Resin 2 (grams) | Curing Agent (DEH™ 58) (grams) |
|---|---|---|---|
| A* | 30 grams of Example 1A | 0 | 2.57 |
| B | 30 grams of Example 1B | 0 | 2.65 |
| C* | 15 grams of Example 1A | 15.2 grams Epoxy Resin A | 3.92 |
| D | 15 grams of Example 1B | 15.3 grams Epoxy Resin A | 3.97 |

*Not an example of the present invention.

Samples A and B were allowed to stand at ambient temperature (25° C) for 1.25 hour and Samples C and D were allowed to stand at ambient temperature at 25° C for 0.25 hour prior to coating onto 4 inch x 12 inch x 24 guage (101.6 mm x 304.8 mm x 0.63 mm) untreated cold rolled steel panels. The panels were cured at ambient temperature for three (3) days prior to testing.

Chemical resistance was determined using the unpigmented panels coated with the unpigmented coating formulations after curing. To the cured, coated panel was placed about 1 to 2 mL of glacial acetic acid and a timer started. The coating was observed for delamination, bubbles or blisters. The surface was maintained wet with glacial acetic acid by the addition of more acid as needed. The results are given in the following Table IV.

Table IV

| Sample | Thickness (mil/mm) | Glacial Acetic Acid Resistance (seconds) |
|---|---|---|
| A* | 0.72/0.018 | 107 |
| B | 0.83/0.021 | 177 |
| C* | 1.83/0.046 | 246 |
| D | 2.10/0.053 | 337 |

* Not an example of the present invention

Samples A and B were allowed to stand at ambiet temperature (25° C) for 1.25 hour and Samples C and D were allowed to stand at ambient temperature at 25° C for 0.25 hour prior to coating onto 4 inch x 12 inch x 24 guage (101.6 mm x 304.8 mm x 0.63 mm) untreated cold rolled steel panels. The panels were cured at ambient temperature for seven (7) days prior to testing. These cured, coated panels were then tested for chemical resistance (glacial acetic acid) according to the above-described procedure. The results are given in the following Table V.

Table V

| Sample | Thickness (mil/mm) | Glacial Acetic Acid Resistance (seconds) |
|---|---|---|
| A* | 1.68/0.043 | 182 |
| B | 1.68/0.043 | 243 |
| C* | 1.61/0.041 | 84 |
| D | 1.79/0.045 | 263 |

* Not an example of the present invention

Pigmented coatings were prepared and tested by the procedure described in Example 6. The coating formulations and test results after curing the coated panels for 14 days at ambient temperature are given in Table VI.

Table VI

| Component & Property | Sample | | | | |
|---|---|---|---|---|---|
| | A* | B | C | D | E |
| Epoxy Resin Type/grams Type/grams | B/50 Ex1A/50 | B/50 Ex 1B/50 | A/50 Ex1B/50 | A/60 Ex1B/40 | A/40 Ex1B/60 |
| Amine B, grams | 17.64 | 17.94 | 19.71 | 20.95 | 18.45 |
| $TiO_2$, grams | 75.9 | 75.9 | 75.9 | 75.9 | 75.9 |
| $BaSO_4$, grams | 175.4 | 175.4 | 175.4 | 175.4 | 175.4 |
| Bentone SD-3, grams | 3 | 3 | 3 | 3 | 3 |
| BYK 310, grams | 1.5 | 1.5 | 1.5 | 1.5 | 1.5 |
| BYK 052, grams | 1.5 | 1.5 | 1.5 | 1.5 | 1.5 |
| Methyl Isobutyl Ketone, grams | 10.16 | 10.16 | 10.16 | 10.16 | 10.16 |
| Methyl Ethyl Kentone, grams | 20.32 | 20.32 | 20.32 | 20.32 | 20.32 |
| Butanol, grams | 33.02 | 33.02 | 33.02 | 33.02 | 33.02 |
| Corrosion Resistance to Glacial Acetic Acid, failure in hour | 0.25 | 0.45 | 0.68 | 1.33 | 0.3 |

* Not an example of the present invention.

Table VI (continued)

| Component & Property | Sample | | | | |
|---|---|---|---|---|---|
| | F | G | H | I | J |
| Epoxy Resin Type/grams Type/grams | B/50 Ex1C/50 | B/50 Ex1D/50 | B/50 Ex 2/50 | B/50 Ex 3/50 | B/50 Ex 7/50 |
| Amine B, grams | 17.9 | 17.80 | 19.32 | 20.8 | 13.9 |
| $TiO_2$, grams | 75.9 | 75.9 | 75.9 | 785.9 | 875.9 |
| $BaSO_4$, grams | 175.4 | 175.4 | 175.4 | 175.4 | 175.4 |
| Betone SD-3, grams | 3 | 3 | 3 | 3 | 3 |
| BYK 310, grams | 1.5 | 1.5 | 1.5 | 1.5 | 1.5 |
| BYK 052, grams | 1.5 | 1.5 | 1.5 | 1.5 | 1.5 |
| Methyl Isobutyl Ketone, grams | 10.16 | 10.16 | 10.16 | 10.16 | 10.16 |
| Methyl Ethyl Ketone, grams | 20.32 | 20.32 | 20.32 | 20.32 | 20.32 |
| Butanol, grams | 33.02 | 33.02 | 33.02 | 33.02 | 33.02 |
| Corrosion Resistanceto Glacial Acetic Acid, failure in hour | 0.37 | 0.53 | 1.53 | 1.17 | 0.17 |

## Claims

1. A product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1.

2. A product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than 1 aliphatic hydroxyl group per molecule which compound is free of aromatic rings, wherein components (1) and (2) are present in amounts such that from 40 to 70 percent of the hydroxyl groups are contributed by component (1) and from 60 to 30 percent of the hydroxyl groups are contributed by component (2) the percentages being based on the total amount of hydroxyl groups present in components (1) and (2); with

(B) at least one epihalohydrin wherein the ratio of moles of epihalohydrin per hydroxyl group contained in components (A1) and (A2) is from 1.08:1 to 1.7:1.

3. A product of Claim 1 or 2 wherein

(i) component (1a) and (A1a) is a biphenol or a bisphenol compound;

(ii) component (1b) and (A1b) is ethylene oxide, 1,2-propylene oxide or 1,2-butylene oxide; and

(iii) component (A2) is a compound containing an average of more than 2 aliphatic hydroxyl groups per molecule.

4. An epoxy-containing composition which comprises a mixture of

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1; and

(B) at least one aromatic or cycloaliphatic based epoxy resin having an average of more than one vicinal epoxide group per molecule and having a degree of polymerization of from 1 to 14.

5. An epoxy-containing composition which comprises a mixture of

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with

(B) at least one epihalohydrin wherein the ratio of moles of epihalohydrin per hydroxyl group contained in components (1) and (2) is from 1.08:1 to 1.7:1; and

(II) at least one aromatic or cycloaliphatic based epoxy resin having an average of more than one vicinal epoxide group per molecule and having a degree of polymerization of from 1 to 14.

6. A composition of Claim 4 or 5 wherein

(i) component (A1a) and (IA1a) is a biphenol or a bisphenol compound;

(ii) component (A1b) and (IA1b) is ethylene oxide, 1,2-propylene oxide or 1,2-butylene oxide;
(iii) component (IA2) is a compound containing an average of more than two aliphatic hydroxyl groups per molecule; and
(iv) component (B) and (II) is a diglycidyl ether of a biphenol or a bisphenol compound or any combination of such diglycidyl ethers.

7. A curable composition comprising
(A) a product having an average of more than one vicinal epoxide group per molecule which results from dehydrohalogenating the product resulting from reacting
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a) of from 1:1 to 8:1; with
(2) at least one epihalohydrin wherein the ratio of moles of epihalohydrin per hydroxyl group contained in component (1) is from 1.2:1 to 1.7:1; and
(B) a curing amount of at least one curing agent or curing catalyst for component (A).

8. A curable composition comprising
(I) a product having an average of more than one vicinal epoxide group per molecule which results from dehydrohalogenating the product resulting from reacting
(A) a mixture of
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a) of from 1:1 to 8:1; and
(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with
(B) at least one epihalohydrin wherein the ratio of moles of epihalohydrin per hydroxyl group contained in components (A1) and (A2) is from 1.08:1 to 1.7:1; and
(II) a curing amount of at least one curing agent or curing catalyst for component (I).

9. A curable composition of Claim 7 or 8 wherein
(i) component (A1a) and (IA1a) is a biphenol or a bisphenol compound;
(ii) component (A1b) and (IA1b) is ethylene oxide, 1,2-propylene oxide or 1,2-butylene oxide;
(iii) component (IA2) is a compound containing an average of more than two aliphatic hydroxyl group per molecule; and
(iv) component (B) and (II) is an aliphatic or aromatic polyamine, polyamide, a polycarboxylic acid or anhydride thereof, a compound containing a plurality of aromatic hydroxyl groups, a polysulfide or any combination thereof.

10. A curable composition comprising
(A) a product having an average of more than one vicinal epoxide group per molecule which results from dehydrohalogenating the product resulting from reacting
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a) of from 1:1 to 8:1; with
(2) at least one epihalohydrin wherein the ratio of moles of epihalohydrin per hydroxyl group contained in component (1) is from 1.2:1 to 1.7:1;
(B) at least one aromatic or cycloaliphatic based epoxy resin having an average of more than one vicinal epoxide group per molecule and having a degree of polymerization of from 1 to 14; and
(C) a curing amount of at least one curing agent or curing catalyst for components (A) and (B).

11. A curable composition comprising
(I) a product having an average of more than one vicinal epoxide group per molecule which results from dehydrohalogenating the product resulting from reacting
(A) a mixture of
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a) of from 1:1 to 8:1; and
(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with
(B) at least one epihalohydrin wherein the ratio of moles of epihalohydrin per hydroxyl group contained in components (A1) and (A2) is from 1.08:1 to 1.7:1;
(II) at least one aromatic or cycloaliphatic based epoxy resin having an average of more than one vicinal epoxide group per molecule and having a degree of polymerization of from 1 to 14; and
(III) a curing amount of at least one curing agent or curing catalyst for components (I) and (II).
12. A curable composition of Claim 10 or 11 wherein
(i) component (A1a) and (IA1a) is a biphenol or a bisphenol compound;
(ii) component (A1b) and (IA1b) is ethylene oxide, 1,2-propylene oxide or 1,2-butylene oxide;
(iii) component (A2) and (IA2) is a compound containing an average of more than two aliphatic hydroxyl groups per molecule;
(iv) component (B) and (II) is a diglycidyl ether of a biphenol or a bisphenol compound having a degree of polymerization of from 1 to 6 or any combination of such diglycidyl ethers; and
(v) component (C) amd (III) is an aliphatic or aromatic polyamine, polyamide, polysulfide, a polycarboxylic acid or anhydride thereof, a compound containing a plurality of aromatic hydroxyl groups, or any combination thereof.
13. A composition of Claim 4 or 10 wherein
(i) component (A) is employed in an amount of from 20 to 80 percent by weight based upon the combined weight of components (A) and (B); and
(ii) component (B) is employed in an amount of from 80 to 20 percent by weight based upon the combined weight of components (A) and (B).
14. A composition of Claim 5 or 11 wherein
(i) component (II) is employed in an amount of from 20 to 80 percent by weight based upon the combined weight of components (I) and (II).
15. The product resulting from curing the curable composition of Claim 7, 8, or 10.
16. A process for preparing a product having an average of more than one vicinal epoxide group per molecule comprising dehydro-halogenating the product resulting from reacting
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a) of from 1:1 to 8:1; with
(2) at least one epihalohydrin wherein the ratio of moles of epihalohydrin per hydroxyl group contained in component (1) is from 1.2:1 to 1.7:1.
17. A process for preparing a product having an average of more than one vicinal epoxide group per molecule comprising dehydrohalogenating the product resulting from reacting
(A) a mixture of
(1) the product resulting from reacting
(a) at least one compound having an average of more than one aromatic hydroxyl group per molecule; with
(b) at least one alkylene oxide having from 2 to 4 carbon atoms per molecule in an amount which provides a ratio of moles of component (b) to aromatic hydroxyl groups contained in component (a)

of from 1:1 to 8:1; and

(2) at least one compound having an average of more than 1 aliphatic hydroxyl group per molecule which compound is free of aromatic rings, wherein components (1) and (2) are present in amounts such that from 40 to 70 percent of the hydroxyl groups are contributed by component (1) and from 60 to 30 percent of the hydroxyl groups are contributed by component (2) the percentages being based on the total amount of hydroxyl groups present in components (1) and (2); with

(B) at least one epihalohydrin wherein the ratio of moles of epihalohydrin per hydroxyl group contained in components (A1) and (A2) is from 1.08:1 to 1.7:1.

18. A process for preparing an epoxy-containing composition comprising mixing

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1; and

(B) at least one aromatic or cycloaliphatic based epoxy resin having an average of more than one vicinal epoxide group per molecule and having a degree of polymerization of from 1 to 14.

19. A process for preparing an epoxy-containing composition comprising mixing

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with

(B) at least one epihalohydrin wherein the ratio of moles of epihalohydrin per hydroxyl group contained in components (1) and )2) is from 1.08:1 to 1.7:1; and

(II) at least one aromatic or cycloaliphatic based epoxy resin having an average of more than one vicinal epoxide group per molecule and having a degree of polymerization of from 1 to 14.

20. A process for preparing a curable composition comprising

(A) a product having an average of more than one vicinal epoxide group per molecule which results from dehydrohalogenating the product resulting from reacting

(1) the product resulting from reacting

a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1; and

(B) a curing amount of at least one curing agent or curing catalyst for component (A).

21. A process for preparing a curable composition comprising

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with

(B) at least one epihalohydrin wherein the ratio of moles of epihalohydrin per hydroxyl group contained in components (A1) and (A2) is from 1.08:1 to 1.7:1; and

(II) a curing amount of at least one curing agent or curing catalyst for component (I).

22. A process for preparing a curable composition comprising mixing

(A) a product having an average of more than one vicinal epoxide group per molecule which results from dehydrohalogenating the product resulting from reacting

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; with

(2) at least one epihalohydrin wherein the ratio of moles of epihalohydrin per hydroxyl group contained in component (1) is from 1.2:1 to 1.7:1;

(B) at least one aromatic or cycloaliphatic based epoxy resin having an average of more than one vicinal epoxide group per molecule and having a degree of polymerization of from 1 to 14; and

(C) a curing amount of at least one curing agent or curing catalyst for components (A) and (B).

23. A process for preparing a curable composition comprising mixing

(I) a product having an average of more than one vicinal epoxide group per molecule which results from dehydrohalogenating the product resulting from reacting

(A) a mixture of

(1) the product resulting from reacting

(a) at least one compound having an average of more than one aromatic hydroxyl group per molecule; with

(b) at least one alkylene oxide having from 2 to 4 carbon atoms per molecule in an amount which provides a ratio of moles of component (b) to aromatic hydroxyl groups contained in component (a) of from 1:1 to 8:1; and

(2) at least one compound having an average of more than one aliphatic hydroxyl group per molecule which compound is free of aromatic rings, wherein components (1) and (2) are present in amounts such that from 30 to 70 percent of the hydroxyl groups are contributed by component (1) and from 70 to 30 percent of the hydroxyl groups are contributed by component (2) the percentages being based upon the total amount of hydroxyl groups contributed by components (1) and (2); with

(B) at least one epihalohydrin wherein the ratio of moles of epihalohydrin per hydroxyl group contained in components (A1) and (A2) is from 1.08:1 to 1.7:1;

(II) at least one aromatic or cycloaliphatic based epoxy resin having an average of more than one vicinal epoxide group per molecule and having a degree of polymerization of from 1 to 14; and

(III) a curing amount of at least one curing agent or curing catalyst for components (I) and (II)